# EUROPEAN PATENT SPECIFICATION

(11) **EP 2 332 719 B1**
(45) Date of publication and mention of the grant of the patent: **25.06.2014**
(21) Application number: 10192375.3
(22) Date of filing: 24.11.2010
(51) Int. Cl.: B29C 65/52, B29C 65/78, D06H 5/00, A41H 43/04, A41D 27/24, B29C 53/36

(54) **Cloth bonding apparatus**
Vorrichtung zum Verbinden vom Stoff
Appareil de liaison de tissus

(30) Priority: 09.12.2009 JP 2009279675
(43) Date of publication of application: 15.06.2011
(73) Proprietor: Brother Kogyo Kabushiki Kaisha, Nagoya-shi, Aichi 467-8561 (JP)
(72) Inventor: Enya, Tetsuji, Nagoya-shi Aichi 467-8562 (JP); Iwakoshi, Hiroyasu, Nagoya-shi Aichi 467-8562 (JP); Nishimura, Kazuto, Nagoya-shi Aichi 467-8562 (JP); Nemoto, Yoshimitsu, Nagoya-shi Aichi 467-8562 (JP); Minagawa, Yuichiro, Nagoya-shi Aichi 467-8562 (JP); Yamaura, Hiroki, Nagoya-shi Aichi 467-8562 (JP); Umeda, Kazutoshi, Nagoya-shi Aichi 467-8562 (JP)
(74) Representative: Prüfer & Partner GbR European Patent Attorneys

(56) References cited:
- FR-A1- 2 777 916
- JP-A- 53 006 681
- US-A- 2 664 938
- US-A- 3 295 493
- US-A- 4 186 043
- US-A- 4 684 419

## Description

### BACKGROUND

The present invention relates to a cloth bonding apparatus that applies an adhesive between cloths and bond the cloths.

The cloth bonding apparatus is directed for bonding cloths with an adhesive instead of sewing the cloths with a needle and a thread. The cloth bonding apparatus includes a feeding mechanism for pressing and feeding cloths, and a nozzle for discharging an adhesive. The nozzle applies an adhesive between cloths that are being fed. The feeding mechanism presses and feeds the cloths to bond the cloths. Since no thread is used for the bonded cloths, the surfaces of the bonded cloths have no unevenness that may be formed by the thread.

The cloth bonding apparatus can apply an adhesive along a hem of a cloth, thereby bonding the hem of the cloth. For example, the cloth bonding apparatus can perform a process of bonding a hem of a folded cloth (which will be referred to as "hemming process" below). The cloth bonding apparatus can also perform a process of bonding aligned hems of two pieces of cloths (which will be referred to as "two-hem bonding process" below).

When the cloth hem is not guided accurately, a width of the bonded part of the cloths will not be uniform. Thus, when performing the hemming process and the two-hem bonding process, a worker has to accurately guide the cloth hem to perform the bonding work. Japanese Patent Application Laid-Open Publication No. 11-114252 discloses therein an accessory for guiding cloths in a typical sewing machine.

### SUMMARY

Unlike a sewing machine, the cloth bonding apparatus includes a nozzle for applying an adhesive between cloths. The nozzle is positioned between the cloths to be bonded, which restricts the positions of the cloths. Therefore, even when a configuration similar to that of the accessory disclosed in the above-mentioned publication is employed, it may be difficult for the cloth bonding apparatus to accurately guide the cloth hem.

US 2,664,938 A discloses a generic cloth bonding apparatus having the features of the preamble of claim 1.

Other cloth bonding apparatuses are known from FR 2 777 916 A1; US 3,295,493; and JP 53-6681. US 4,684,419 disclose a method and apparatus for forming automobile convertible tops, and US 4,186,043 discloses a method for hemming fabric using a hot melt adhesive.

It is an object of the present invention to provide a cloth bonding apparatus capable of accurately guiding a cloth hem and thereby improving cloth bonding quality when bonding the cloth hem.

A cloth bonding apparatus according to the present invention includes a feeding mechanism, a nozzle, a support portion, and a first guide. The feeding mechanism is adapted to press and feed at least one cloth. The nozzle extends in a direction that intersects a feeding direction of the at least one cloth fed by the feeding mechanism, and includes a discharge port through which an adhesive is dischargeable. The support portion supports the nozzle on an upstream side of the feeding mechanism in the feeding direction. The first guide member is arranged on at least one of the nozzle and the support portion, and is adapted to guide a hem of the at least one cloth in the feeding direction.

The cloth bonding apparatus can guide the feeding of the hem by the first guide member arranged on at least one of the nozzle and the support portion. Thus, the cloth bonding apparatus can accurately feed the hem near the nozzle and apply an adhesive to the hem with a constant width. The cloth bonding apparatus can bond the hem with a constant width.

The cloth bonding apparatus further includes a second guide member that is arranged on an upstream side of the nozzle in the feeding direction and that is adapted to guide, at least, the hem in the feeding direction. In this case, the cloth bonding apparatus can smoothly feed the hem from the upstream side of the nozzle in the feeding direction toward the nozzle. Since the hem is less likely to be bent near the nozzle, the cloth is less likely to ruck up.

In the cloth bonding apparatus, the at least one cloth may be one piece of cloth, and the second guide member may include a lower guide portion, an end guide portion, and an upper guide portion. The lower guide portion extends below the nozzle in an extending direction of the nozzle and is adapted to guide a portion of the one piece of cloth positioned below the nozzle in the feeding direction. The end guide portion connects to and extends upward from an end of the lower guide portion, the end being located on a same side as a first end of the nozzle on which side the discharge port is provided. The end guide portion is adapted to guide a portion of the one piece of cloth covering the first end of the nozzle in the feeding direction. The upper guide portion connects to the end guide portion and extends above an upper end of the nozzle toward a second end of the nozzle, the second end being an opposite end to the first end. The upper guide portion is adapted to guide the hem positioned above the nozzle in the feeding direction. With the second guide member, the one piece of cloth is bent upward near the lower part on the first end side of the nozzle and is bent further near the top part on the first end side of the nozzle toward the second end of the nozzle. The second guide member can guide the feeding of the hem by the feeding mechanism in a state where the hem of the one piece of cloth is bent. Thus, the cloth bonding apparatus can accurately guide the feeding of the hem when performing the hemming process, thereby reducing loads on the worker.

In the cloth bonding apparatus, the nozzle may include a tip discharge port that faces in at least one of a direction toward the first end of the nozzle and a direction that is inclined relative to the direction toward the first end of the nozzle. In this case, the cloth bonding apparatus can reliably discharge an adhesive also inside the bent part of the cloth. Thus, the cloth bonding apparatus can accurately guide the feeding of the hem and can reliably bond the bent part of the cloth to which an adhesive is difficult to be applied.

In the cloth bonding apparatus, the at least one cloth may include a lower cloth and an upper cloth, the lower cloth being positioned below the upper cloth when the lower cloth and the upper cloth are bonded, and the second guide member may include a lower cloth guide portion that is adapted to guide a feeding of the lower cloth and an upper cloth guide portion that is adapted to guide a feeding of the upper cloth. The lower cloth guide portion and the upper cloth guide portion may each include a lower regulation portion that is adapted to regulate a downward movement of the lower cloth or the upper cloth, an upper regulation portion that is adapted to regulate an upward movement of the lower cloth or the upper cloth, and a side regulation portion that is adapted to regulate a movement of the lower cloth or the upper cloth in at least one of directions that intersect the feeding direction. The lower cloth guide portion and the upper cloth guide portion each guide the feeding of the lower and upper cloths by the lower regulation portion, the upper regulation portion and the side regulation portion. Thus, when performing the two-hem bonding process, the cloth bonding apparatus can accurately guide the feeding of the two cloths to be bonded. The cloth bonding apparatus can improve cloth bonding quality while reducing loads on the worker during the two-hem bonding process.

In the cloth bonding apparatus, the lower regulation portion of the lower cloth guide portion may be positioned at a same height as or lower than a lower end of the nozzle, and the lower regulation portion of the upper cloth guide portion may be positioned at a same height as or higher than an upper end of the nozzle. In this case, the cloth bonding apparatus can feed the two cloths to the nozzle such that the two cloths sandwich the nozzle from above and below. Thus, the cloths being fed are less likely to encounter resistance from a side of the nozzle (the front side in the feeding direction). The cloth bonding apparatus can perform the two-hem bonding process while smoothly feeding the two cloths.

In the cloth bonding apparatus, a distance in a vertical direction between a top surface of the lower cloth guided by the lower cloth guide portion and a lower surface of the upper cloth guided by the upper cloth guide portion may preferably be equal to a width of the nozzle in the vertical direction. In this case, the cloth bonding apparatus can feed each of the two cloths in parallel from the second guide member toward the nozzle. Thus, the cloth bonding apparatus can precisely apply an adhesive between the two cloths while minimizing the possibility that the two cloths are subjected to resistance, bending or the like.

The cloth bonding apparatus may further include a second adjustment mechanism that moves a position of the second guide member in the direction that intersects the feeding direction. In this case, the worker can freely set the bonding width of the two cloths.

The cloth bonding apparatus may further include a switching mechanism that switches a position of the second guide member between a use position in which the second guide member is positioned on the upstream side of the nozzle in the feeding direction and a retracted position in which the second guide member is positioned away from a feeding path of the at least one cloth. In this case, when the worker does not use the second guide member, the position of the second guide member may be switched to the retracted position. The second guide member at the retracted position does not hinder the work. Thus, the worker can easily perform the work.

The cloth bonding apparatus may further include a first adjustment mechanism that moves a position of the first guide member in the direction that intersects the feeding direction. In this case, the worker can adjust the width of the adhesive to be applied to the cloth to a desired width.

### BRIEF DESCRIPTION OF THE DRAWINGS

Exemplary embodiments of the present disclosure will be described below in detail with reference to the accompanying drawings in which:
FIG. 1 is a perspective view of a cloth bonding apparatus 1 seen obliquely from above and in front on the left;
FIG. 2 is a front view of a support portion 30 and a nozzle 35;
FIG. 3 is a plan view of the support portion 30 and the nozzle 3.5;
FIG. 4 is a right side view of the support portion .30 and the nozzle 35;
FIG. 5 is a bottom view of the support portion 30 and the nozzle 35;
FIG. 6 is a sectional view taken along the line I-I of FIG. 5;
FIG. 7 is a plan view of a hem guide member 50 at a retracted position;
FIG. 8 is a plan view of the hem guide member 50 and the nozzle 35 at a use position;
FIG. 9 is a front view of the hem guide member 50 at the use position;
FIG. 10 is an enlarged front view showing a positional relationship between the hem guide member 50 and the nozzle 35 at the use position;
FIG. 11 is a plan view of a two-hem guide member 150 at the retracted position;
FIG. 12 is a plan view of the two-hem guide member 150 at the use position;
FIG. 13 is an enlarged front view of the two-hem guide member 150 and a nozzle 135 at the use position;
FIG. 14 is an enlarged front view of the nozzle 135 and a two-hem guide member 250 according to Variant 1;
FIG. 15 is a front view of a support portion 330 and a nozzle 335 according to Variant 2;
FIG. 16 is a sectional view of a nozzle 235 according to Variant 3;
FIG. 17 is a sectional view of a nozzle 360 according to Variant 4; and
FIG. 18 is a sectional view of a nozzle 370 according to Variant 5.

### DETAILED DESCRIPTION OF EXEMPLARY EMBODIMENTS

A cloth bonding apparatus 1 according to a first embodiment of the present invention will be described below with reference to the drawings.

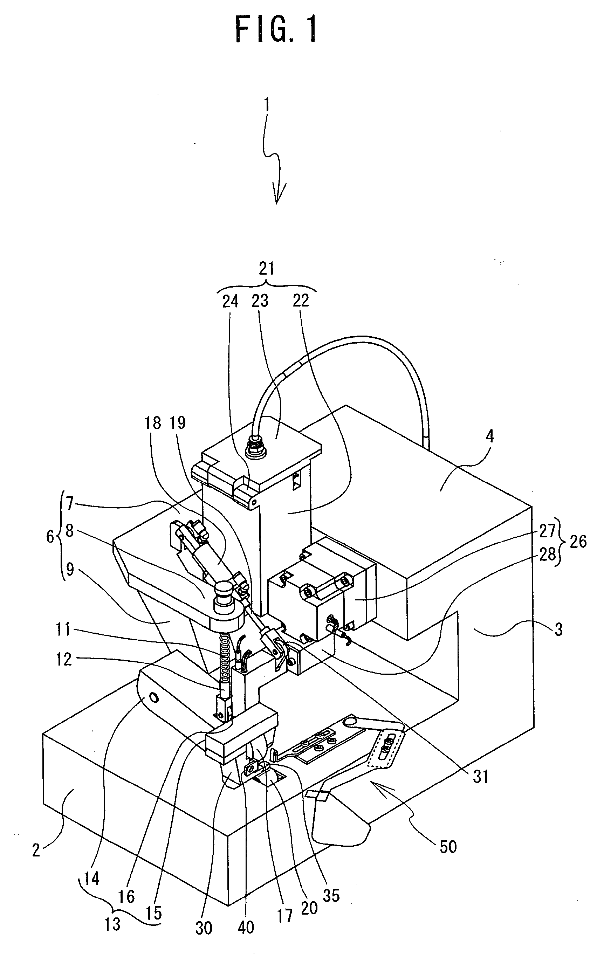

A configuration of the cloth bonding apparatus 1 will now be described with reference to FIG. 1. In the following description, diagonally downward right, diagonally upward left, diagonally upward right and diagonally downward left in FIG. 1 correspond to the front side, rear side, right side, and left side of the cloth bonding apparatus 1, respectively.

As shown in FIG. 1, the cloth bonding apparatus 1 includes a bed portion 2, a pillar portion 3 and an arm portion 4. The bed portion 2 has a substantially rectangular parallelepiped shape with the horizontal direction as its longitudinal direction. The bed portion 2 is fixed on a table (not shown). The pillar portion 3 extends vertically upright from the right end of the bed portion 2. The arm portion 4 is connected to the upper end of the pillar portion 3 and projects leftward from the left side of the pillar portion 3.

The bed portion 2 includes therein a lower feed roller and a lower feed motor, etc., which are not shown. The lower feed roller is positioned below an upper feed roller 17 and drives a belt 20. The lower feed motor rotates the lower feed roller. The bed portion 2 serves as a foundation for supporting the pillar portion 3. The pillar portion 3 supports the arm portion 4. The arm portion 4 includes a beam portion 6, a storage chamber 21 and a pump casing 26 in this order from behind. The arm portion 4 includes therein various motors, etc.

The beam portion 6, the storage chamber 21 and the pump casing 26 will be described below in sequence. The beam portion 6 includes a body portion 7, a spring support portion 8 and a column portion 9. The body portion 7 is a substantially bar-shaped member and extends horizontally leftward from the rear left end of the arm portion 4. The spring support portion 8 has a plate shape and extends horizontally forward from the left end of the body portion 7. The column portion 9 extends diagonally downward and forward from the body portion 7 at about 45 degrees relative to the horizontal plane. The lower end of the column portion 9 is spaced from the bed portion 2.

The spring support portion 8 includes an opening at the front end portion thereof. The upper end of a shaft portion 12 is inserted through the opening so that the spring support portion 8 supports the shaft portion 12 movably in the vertical direction. The shaft portion 12 is inserted into a spring 11. The column portion 9 has a horizontally-extending shaft at the left of the lower end portion thereof. The column portion 9 supports a rear end 14 of a roller holding portion 13 by the shaft. The roller holding portion 13 can vertically swing a front end 15 thereof with the shaft as the center of swing. The body portion 7 is provided with an air cylinder 18 to the right of the spring support portion 8. The air cylinder 18 changes the position of a support portion 30 described later.

The roller holding portion 13 rotatably supports the upper feed roller 17 at the front end portion 15. The upper feed roller 17 is cylindrical and is positioned near the rear of the nozzle 35. The nozzle 35 projects rightward from the lower end of the support portion 30. The roller holding portion 13 includes a shaft support portion 16 at a position of the top surface which lies slightly forward from the center. The shaft support portion 16 supports the lower end of the shaft 12 inserted through the spring 11. The spring 11 is interposed between the spring support portion 8 and the lower part of the shaft portion 12. The spring 11 urges the shaft portion 12 downward to thereby urging the roller holding portion 13 downward.

The storage chamber 21 will now be described. The storage chamber 21 has a substantially rectangular parallelepiped shape with the vertical direction as the longitudinal direction. The storage chamber 21 extends upward from the left of the arm portion 4 and the rear of the pump casing 26. The storage chamber 21 includes a storage chamber body 22, a cover portion 23 and a cover shaft portion 24. The storage chamber body 22 has a bottomed-tube shape with an opening at the top. The cover portion 23 covers the top opening of the storage chamber body 22. The cover shaft portion 24 supports one end of the cover portion 23 to the storage chamber body 22. The storage chamber 21 stores an adhesive in the storage chamber body 22. The storage chamber 21 supplies the stored adhesive to a gear pump (not shown) inside the pump casing 26 and the nozzle 35.

The pump casing 26 will now be described. The pump casing 26 includes a first pump casing 27 and a second pump casing 28. The first pump casing 27 has a substantially cubic shape, and is connected to the left side of the arm portion 4 with four screws. The first pump casing 27 has a concave portion on its left side. The first pump casing 27 includes the gear pump (not shown) in the concave portion. The second pump casing 28 is connected to the left side of the first pump casing 27 with four screws to cover the gear pump. The first pump casing 27 and the second pump casing 28 form a pump chamber. The gear pump pressurizes and supplies an appropriate amount of adhesive to the nozzle 35 with high accuracy.

The second pump casing 28 includes a shaft at the left side of its lower part and swingably supports the support portion 30 with the shaft. The support portion 30 extends leftward from the lower part of the second pump casing 28 and bends downward at its left end. The lower end of the support portion 30 is slightly spaced from the top surface of the bed portion 2. The support portion 30 includes a drive transmitting portion 31 at its upper end. The drive transmitting portion 31 is connected to the tip end of a movable portion 19 of the air cylinder 18. The supports portion a0 swings back and forth along with the back-and-forth movement of the movable portion 19. In the cloth bonding apparatus 1 according to the first embodiment, the nozzle 35 projects rightward from the lower end of the support portion 30. However, the projecting direction of the nozzle 35 may be changed by a method, such as mounting a support portion of a different shape. The nozzle 35 is bar-like in its outer shape.

The support portion 30 includes a first guide member 40. The first guide member 40 is positioned above the nozzle 35. The first guide member 40 contacts a hem of a cloth to guide the hem above the nozzle 35, while the cloth is fed by the upper feed roller 17 as the feeding mechanism. Further, the cloth bonding apparatus 1 includes a hem guide member 50 on the top surface of the bed portion 2. The hem guide member 50 guides the cloth or the cloth hem that is being fed on the upstream side of the nozzle 35 in the feeding direction.

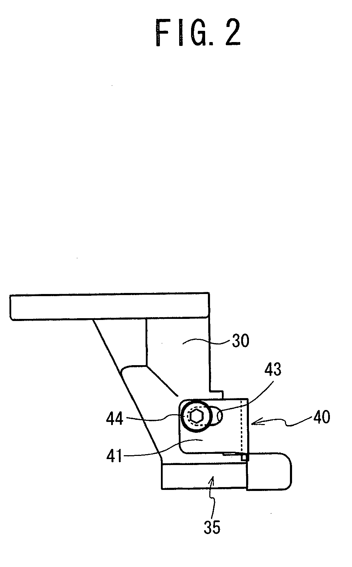

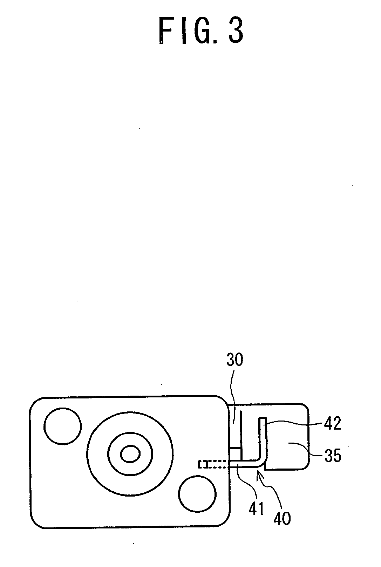

The first guide member 40 will now be described with reference to FIGS. 2 to 4. The first guide member 40 is a metallic plate-like member and includes a base 41 and a contact portion 42. The base 41 extends rightward from the front of the lower part of the support portion 30. The contact portion 42 extends from the right end of the base 41 toward the back. The right side face of the contact portion 42 is parallel with the cloth feeding direction of the feeding mechanism and is a smooth surface that is orthogonal to the horizontal plane. Thus, the cloth hem positioned above the nozzle 35 moves straight along the feeding direction while contacting the right side face of the contact portion 42.

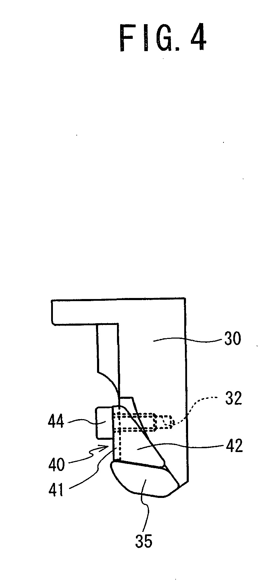

As shown in FIG. 4, the support portion 30 includes a screw hole 32 slightly below the center of the front side thereof. As shown in FIG. 2, the base 41 of the first guide member 40 includes a long hole 43 into which a screw can be inserted. A screw 44 is inserted into the long hole 43 to be fastened in the screw hole 32 of the support portion 30. The long hole 43 is longer in the left- right direction. Thus, the worker can loosen the screw 44 to move the first guide member 40 in the left-right direction in the range of the long hole 43. Then, the worker can fasten the screw 44 to fix the first guide member 40 at a desired position in the range.

The cloth bonding apparatus 1 can apply an adhesive along a hem of a cloth, thereby bonding the hem of the cloth. Specifically, the cloth bonding apparatus 1 can perform the hemming process in which a hem of a folded cloth is bonded. When performing the hemming process, the worker can adjust the position of the first guide member 40 in the left- right direction, thereby adjusting the width of the cloth hem to be bent and bonded. The cloth bonding apparatus 1 can also perform the two-hem bonding process in which two cloth hems are aligned and bonded. When performing the two-hem bonding process, the worker can adjust the position of the first guide member 40 in the left- right direction, thereby adjusting the width of the cloth hem of the upper cloth to be bonded to the lower cloth.

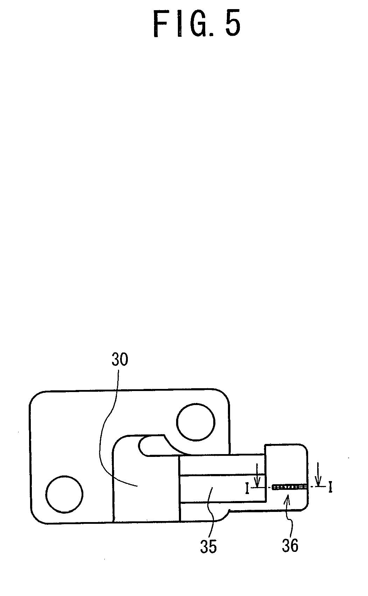

The structure of the nozzle 35 and the hem guide member 50 in the cloth bonding apparatus 1 will now be described with reference to FIGS. 5 to 10.

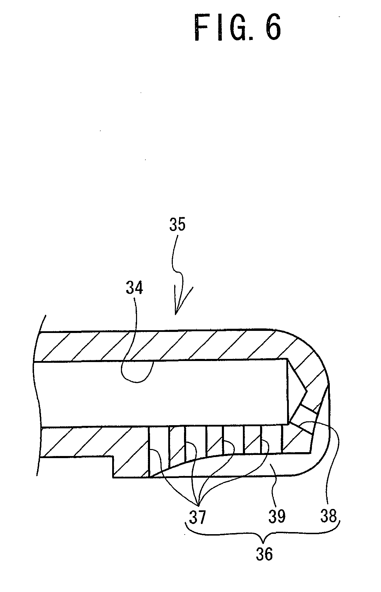

As shown in FIG. 5, the nozzle 35 includes a discharge portion 36 for discharging an adhesive at the bottom of the right end thereof. The discharge portion 36 extends in the left- right direction which is the extending direction of the bar-shaped nozzle 35. As shown in FIG. 6, the discharge portion 36 includes multiple lower discharge ports 37 made of small holes, a tip discharge port 38 made of a small hole, and a groove 39. The lower discharge ports 37 extend from a channel 34 for adhesive, which runs through the nozzle 35, in such a way as to face downward. The four lower discharge ports 37 are aligned in the left-right direction at constant intervals. One tip discharge port 38 extends from the right end of the channel 34 in such a way as to face diagonally downward. When performing the hemming process, it may be desirable that the cloth bonding apparatus 1 discharges an adhesive also inside the bent part of the bent cloth. Because the nozzle 35 includes the tip discharge port 38, the nozzle 35 can reliably discharge an adhesive inside the bent part.

The five discharge ports 37 and 38 including the four lower discharge ports 37 and one tip discharge port 38 are formed such that the diameters thereof become larger to some extent toward the right-end discharge port. During the bonding process, the adhesive flows inside the channel 34 and flows out from the discharge ports 37 and 38. Thus, if the diameters of the five discharge ports 37 and 38 are all the same, the flow amount of the adhesive is reduced to some extent toward the right end. Since the discharge ports 37 and 38 according to the present embodiment are formed to have a large diameter to some extent toward the right-end discharge port, the adhesive can be uniformly discharged from each of the discharge ports 37 and 38. Further, the nozzle 35 has the concaved groove 39 on the surfaces of the five discharge ports 37 and 38. The groove 39 allows the adhesive that has flowed out from the five discharge ports 37 and 38 to be uniformly applied onto the cloth.

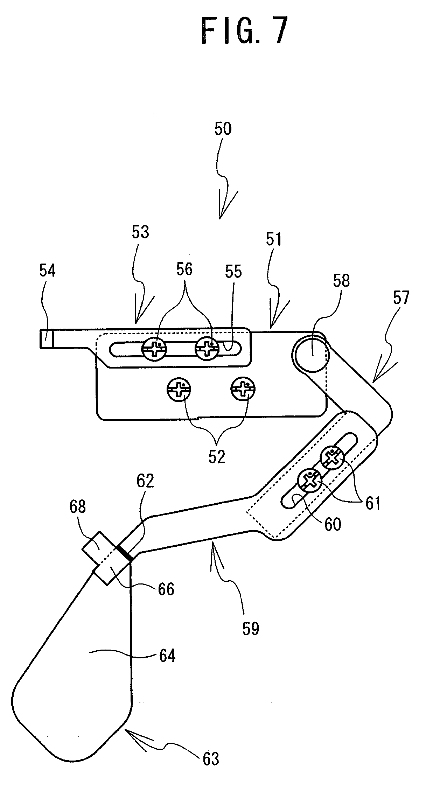

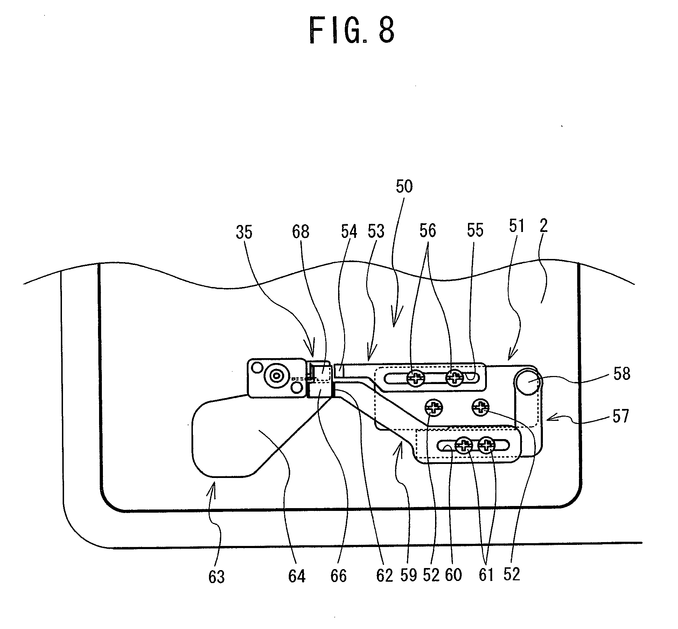

The hem guide member 50 will now be described. As shown in FIGS. 7 to 9, the hem guide member 50 comprises a base portion 51, an auxiliary portion 53, a rotation portion 57, a connection portion 59 and a guide portion 63. The base portion 51 has a rectangular plate shape and is connected to the auxiliary portion 53 and the rotation portion 57. The base portion 51 is fixed on the bed portion 2 (see FIG. 8) with two screws 52. Thus, the base portion 51 supports the entire hem guide member 50.

The auxiliary portion 53 has a plate shape and is connected to the top surface of the left rear end of the base portion 51. The auxiliary portion 53 includes a bending portion 54 bending upward at the left end. The left side face of the bending portion 54 is a smooth surface extending vertically upright. The auxiliary portion 53 includes a long hole 55 that is positioned slightly to the left of the center and extends from the vicinity of the right end. Two screws 56 are fastened on the base portion 51 through the long hole 55. The worker can loosen the screws 56, and move the auxiliary portion 53 in the left-right direction. The worker fastens the screws 56, thereby fixing the auxiliary portion 53 at a desired position.

The rotation portion 57 is a plate-shaped member having a reversed-L shape in a plan view, and is rotatably connected to the top surface of the right rear end of the base portion 51. The rotation portion 57 supports the connection portion 59 in a position-adjustable state. A part supporting the connection portion 59 of the rotation portion 57 includes a projection (not shown) projecting downward. The rotation portion 57 can be rotated about a connection shaft 58 interposed between the rotation portion 57 and the base portion 51 to switch the position of the hem guide member 50. The worker can switch the position of the hem guide member 50 between a use portion (i.e., a position shown in FIG. 8) and a retracted position (i.e., a position shown in FIG. 7). The use position is where a guide portion 63 is located on the upstream side of the nozzle 35 in the feeding direction. The retracted position is where the guide portion 63 separates from the cloth feeding path. As shown in FIG. 8, when the rotation portion 57 is rotated to the use position, the projection of the rotation portion 57 contacts the end of the front of the base portion 51. Consequently, the use position of the hem guide member 50 is stabilized. By rotating the rotation portion 57 until the base portion 51 and the projection of the rotation portion 57 contact each other, the worker can switch the position of the hem guide member 50 to the use position easily and precisely.

The connection portion 59 is a plate-shaped member and includes a long hole 60 at the end on the rotation portion 57 side. Two screws 61 are fastened on the rotation portion 57 through the long hole 60. The worker can loosen the screws 61 to adjust the position of the guide portion 63 in the left-right direction when the hem guide member 50 is at the use position. The worker can fasten the screws 61 to fix the guide portion 63 at a desired position.

The connection portion 59 includes a bending portion 62 bending upward at the other end thereof (at the left end shown in FIGS. 7 to 9). The bending portion 62 is joined to the guide portion 63.

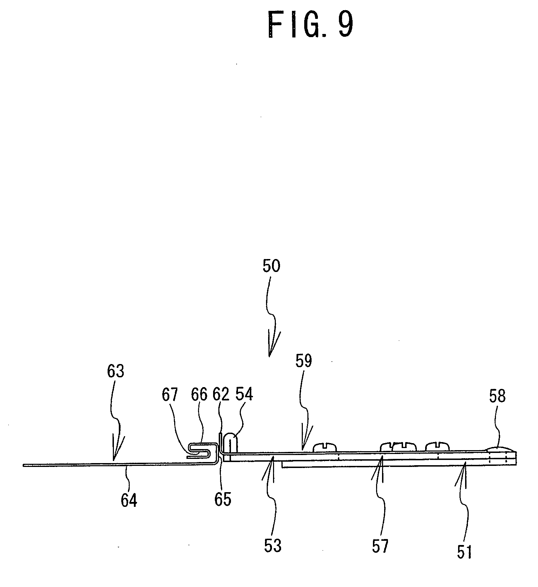

The guide portion 63 is made of metallic plate, and is formed to be wider from the one end joined to the bending portion 62 toward the other end. As shown in FIG. 9, the guide portion 63 includes a lower guide portion 64, an end guide portion 65, an upper guide portion 66 and a bending guide portion 67. The lower guide portion 64 is a plate-shaped member extending in the left-right direction which is the extending direction of the nozzle 35, and its plate face is parallel with the horizontal plane. The end guide portion 65 extends upward from the right end of the lower guide portion 64 (a part at the end having the discharge portion 36 of the nozzle 35). The bending portion 62 of the connection portion 59 described above is connected to the right side face of the end guide portion 65. The upper guide portion 66 extends leftward from the upper end of the end guide portion 65 (the other end of the nozzle 35). The bending guide portion 67 extends downward from the left end of the upper guide portion 66, bends rightward, bends further downward, and bends leftward slightly above the lower guide portion 64. As shown in FIGS. 7 and 8, the upper guide portion 66 includes a guide auxiliary piece 68. The guide auxiliary piece 68 extends rearward from the upper guide portion 66 and is positioned above the nozzle 35 when the hem guide member 50 is at the use position. The guide auxiliary piece 68 restricts the cloth hem from moving upward, thereby guiding the cloth hem more accurately.

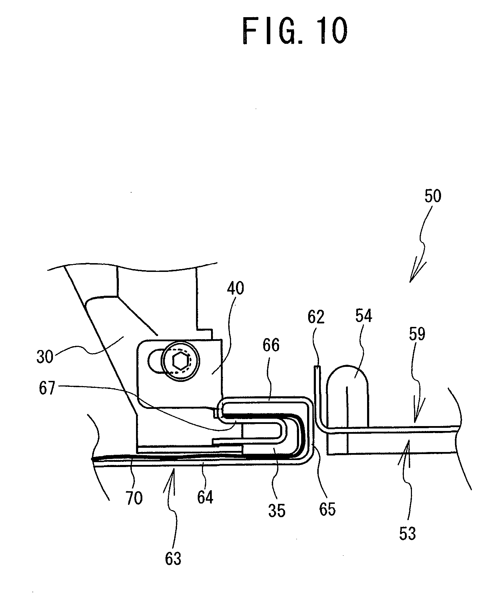

The positional relationship between the hem guide member 50 and the nozzle 35 and the cloth feeding manner will now be described with reference to FIG. 10. As shown in FIG. 10, the top surface of the lower guide portion 64 of the guide portion 63 is positioned slightly below the lower end of the nozzle 35. The hem guide member 50 is formed such that a difference between the height position of the top surface of the lower guide portion 64 and the height position of the lower end of the nozzle 35 substantially coincides with the thickness of the cloth 70. The left side face of the end guide portion 65 is positioned slightly rightward from the right end of the nozzle 35. The lower surface of the upper guide portion 66 is positioned slightly above the top surface of the nozzle 35.

When performing the hemming process, the worker bends the cloth 70 and arranges it at the hem guide member 50. The cloth hem is arranged at a position sandwiched between the bending guide portion 67 and the upper guide portion 66. The cloth 70 extends rightward from the cloth hem, bends, and extends downward between the end guide portion 65 and the bending guide portion 67. Further, the cloth 70 bends leftward, and extends leftward along the top surface of the lower guide portion 64. When the feeding mechanism (upper feed roller 17) is driven, the bent cloth 70 is moved to the nozzle 35.

The upper guide portion 66 and the bending guide portion 67 guide the cloth hem positioned above the nozzle 35, while restricting a movement of the cloth hem in the leftward, upward and downward direction. The end guide portion 65 restricts an outward (rightward) movement of the bent part of the cloth 70 (a part covering the right end of the nozzle 35). The lower guide portion 64 restricts a downward movement of the cloth 70 positioned below the nozzle 35. Thus, the cloth bonding apparatus 1 can accurately feed the bent cloth 70 to the nozzle 35 by the hem guide member 50 on the upstream side of the nozzle 35 in the feeding direction of the cloth 70. Further, the bending guide portion 67 can contact the bent part of the cloth 70 from inside and guide the feeding of the cloth 70. The left side of the bending portion 54 of the auxiliary portion 53 can contact the bent part of the cloth 70 from outside and guide the feeding of the cloth 70. Consequently, the hem guide member 50 can reliably guide the feeding of the cloth 70 and improve the quality of bonding by the hemming process.

As described above, the cloth bonding apparatus 1 according to the first embodiment can guide the feeding of the cloth hem by the first guide member 40 provided on the support portion 30. Thus, the cloth bonding apparatus 1 can apply an adhesive to the cloth hem with a constant width and bond the cloth hem with a constant width while accurately feeding the cloth hem near the nozzle 35. The hem guide member 50 can guide the bent cloth 70 on the upstream side of the nozzle 35 in the feeding direction. Therefore, the cloth bonding apparatus 1 can smoothly feed the cloth 70 from the upstream side of the nozzle 35 in the feeding direction toward the vicinity of the nozzle 35. Since the cloth 70 smoothly moves toward the nozzle 35, the cloth is less likely to be bent due to resistance from the nozzle 35. Accordingly, the quality of bonding by the hemming process is improved.

The upper guide portion 66 and the bending guide portion 67 in the hem guide member 50 can guide the cloth 70 positioned above the nozzle 35 in parallel with the horizontal plane. Thus, the cloth 70 is not subjected to the resistance from the front of the nozzle 35. Similarly, since the end guide portion 65 can guide the bent part of the cloth 70 straight toward the tip end of the nozzle 35, the cloth 70 is not subjected to the resistance from the nozzle 35. Since the lower guide portion 64 can guide the cloth 70 positioned below the nozzle 35 in parallel with the horizontal plane, the cloth 70 is not subjected to the resistance from the nozzle 35. Thus, although the nozzle 35 having a certain thickness needs to be arranged at the bent part of the cloth 70, the cloth bonding apparatus 1 can prevent the cloth 70 from being subjected to the resistance from the nozzle 35 and can smoothly perform the work of bonding the cloth 70.

Since the nozzle 35 of the cloth bonding apparatus 1 includes the tip discharge port 38, an adhesive can be reliably discharged also inside the bent part of the bent cloth 70. Thus, the cloth bonding apparatus 1 can reliably apply an adhesive also inside the bent part of the cloth 70 to which the adhesive is difficult to be applied, while accurately guiding the feeding of the bent cloth 70.

The hem guide member 50 includes the long hole 60 and the screws 61 for moving the guide portion 63 in a direction (in the left-right direction) intersecting with the feeding direction of the cloth 70. The cloth bonding apparatus 1 includes the long hole 43 and the screws 44 for moving the first guide member 40 in a direction intersecting with the feeding direction of the cloth 70. Thus, the worker can appropriately adjust the width of the part to be bonded of the cloth 70, and can apply an adhesive onto the cloth 70 with a constant width. The worker can rotate the rotation portion 57 about the connection shaft 58 to switch the position of the hem guide member 50 between the use position and the retracted position. Accordingly, if the worker switches the position of the hem guide member 50 to the retracted position when the worker does not perform the hemming process, the hem guide member 50 will not hinder the work.

In the above first embodiment, the upper feed roller 17 corresponds to the "feeding mechanism" of the present invention. The hem guide member 50 corresponds to the "second guide member" of the present invention. The long hole 43 and the screws 44 in the first guide member 40 correspond to the "first adjustment mechanism" of the present invention. The long hole 60 and the screws 61 in the hem guide member 50 correspond to the "second adjustment mechanism" of the present invention. The connection shaft 58 corresponds to the "switching mechanism" of the present invention.

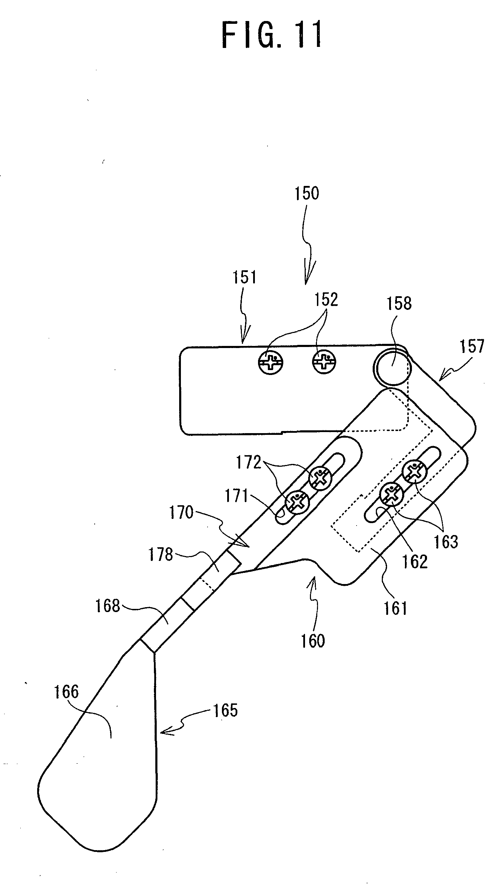

A cloth bonding apparatus according to a second embodiment will now be described with reference to FIGS. 11 to 13. The cloth bonding apparatus according to the second embodiment is different from the cloth bonding apparatus 1 according to the first embodiment in that a two-hem guide member 150 is employed, instead of the hem guide member 50. In addition, a nozzle 135 has a different shape from the nozzle 35 of the first embodiment. Thus, in the description of the second embodiment, the same reference numerals are denoted to the same elements as those in the first embodiment and explanation thereof will be omitted. The nozzle 135 according to the second embodiment has only discharge ports facing downward, and does not have a discharge port facing toward the right end.

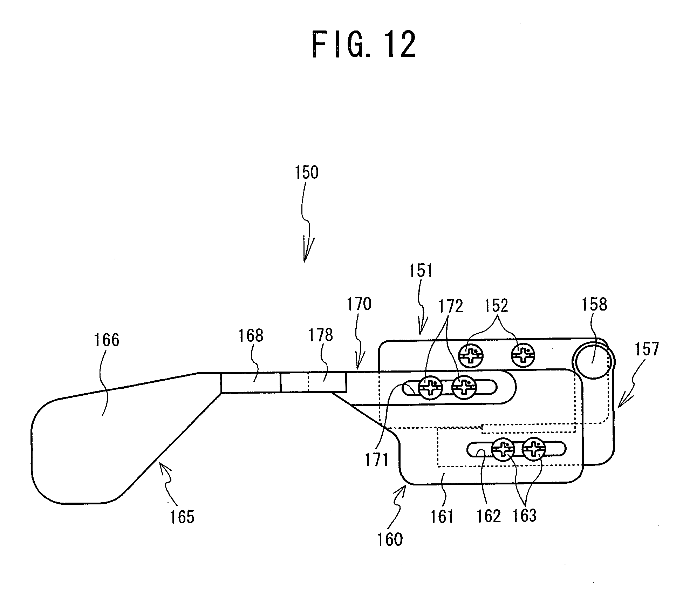

The two-hem guide member 150 will now be described. As shown in FIGS. 11 and 12, the two-hem guide member 150 includes a base portion 151, a rotation portion 157, a lower cloth guide portion 160 and an upper cloth guide portion 170. The base portion 151 has a rectangular plate shape, and is fixed on the bed portion 2 (see FIG. 1) with two screws 152. The rotation portion 157 is a plate-shaped member having a reversed-L shape in a plan view, and is rotatably connected to the top surface of the base portion 151. The rotation portion 157 supports the lower cloth guide portion 160 in a position-adjustable state. The part of the rotation portion 157 supporting the lower cloth guide portion 160 includes a projection (not shown) projecting downward. The rotation portion 157 can rotate about the connection shaft 158 to switch the position of the two-hem guide member 150 between the use position (i.e., a position shown in FIG. 12) and the retracted position (i.e., a position shown in FIG. 11). When the rotation portion 157 is rotated to the use position, the projection (not shown) of the rotation portion 157 contacts the end of the front of the base portion 151. Thus, the worker can easily and precisely switch the position of the two-hem guide member 150 to the use position.

The lower cloth guide portion 160 is a plate-shaped member and includes a base 161 and a guide plate 165. The base 161 has a substantially rectangular shape, and is formed to be narrower in its width toward the left side (in FIG. 12). The base 161 includes a long hole 162 at its lower right part (in FIG. 12). Two screws 163 are fastened on the rotation portion 157 through the long hole 162. The worker can loosen the screws 163 to move the lower cloth guide portion 160 and the upper cloth guide portion 170 described later. The worker can fasten the screws 163 to fix the lower cloth guide portion 160 at a desired position.

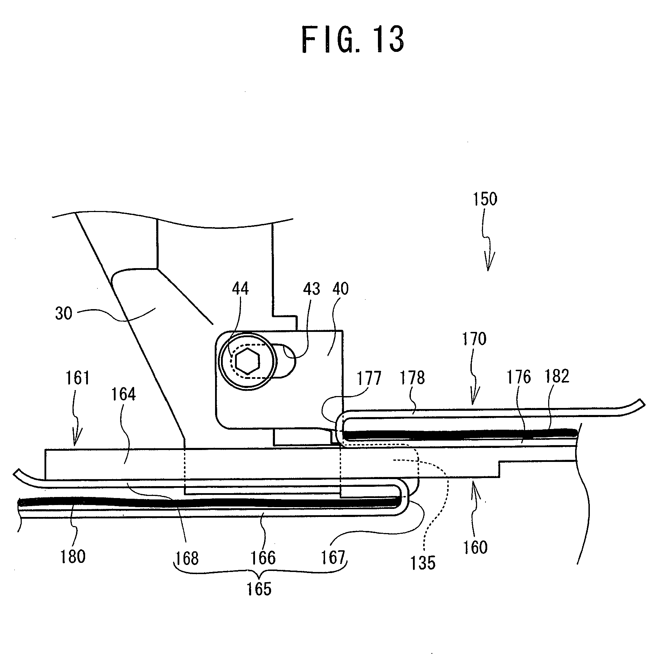

As shown in FIG. 13, the left end 164 of the base 161 is thicker than the right end of the base 161. The left end 164 has the upper part of the right end of the guide plate 165 fixed on its lower part. The guide plate 165 is made of a metallic plate and is formed to be wider toward the left side in a plan view (see FIGS. 11 and 12). As shown in FIG. 13, the guide plate 165 includes a lower regulation portion 166, a side regulation portion 167 and an upper regulation portion 168. The lower regulation portion 166 is a plate-shaped member extending in the left-right direction that is the extending direction of the nozzle 135 and is parallel with the horizontal plane. The side regulation portion 167 extends upward from the right end of the lower regulation portion 166. The upper regulation portion 168 extends leftward from the upper end of the side regulation portion 167. The left end of the upper regulation portion 168 is curved slightly upward in order to facilitate the insertion of the cloth into the guide plate 165.

As shown in FIGS. 11 and 12, the upper cloth guide portion 170 is a plate-shaped member and includes a long hole 171 at the end of the base 161. Two screws 172 are fastened on the base 161 through the long hole 171. Thus, the worker can adjustably fix the upper cloth guide portion 170 on the lower cloth guide portion 160.

As shown in FIG. 13, the upper cloth guide portion 170 includes a lower regulation portion 176, a side regulation portion 177 and an upper regulation portion 178. The lower regulation portion 176 is a plate-shaped member extending in the left-right direction. The side regulation portion 177 extends upward from the left end of the lower regulation portion 176. The upper regulation portion 178 extends rightward from the upper end of the side regulation portion 177. The right end of the upper regulation portion 178 is curved slightly upward.

The cloth feeding and the positional relationship between the two-hem guide member 150 and the nozzle 135 will now be described with reference to FIG. 13. The lower regulation portion 166 of the lower cloth guide portion 160 is positioned at the same height as or lower than the lower end of the nozzle 135. Consequently, when a lower cloth 180 guided by the lower cloth guide portion 160 is passing near the nozzle 135, the lower cloth 180 does not contact the front of the nozzle 135. Therefore, the lower cloth 180 is not subjected to resistance from the nozzle 135. The lower regulation portion 166 of the lower cloth guide portion 160 may be positioned below the lower end of the nozzle 135 by the thickness of the lower cloth 180. Thus, the top surface of the lower cloth 180 moves from the lower cloth guide portion 160 toward the lower end of the nozzle 135 in parallel and it does not bend during the movement.

The lower regulation portion 176 of the upper cloth guide portion 170 is positioned at the same height as or higher than the upper end of the nozzle 135. With this configuration, when an upper cloth 182 guided by the upper cloth guide portion 170 is passing near the nozzle 135, the upper cloth 182 does not contact the front of the nozzle 135. Therefore, the upper cloth 12 is not subjected to resistance from the nozzle 135. The top surface of the lower regulation portion 176 of the upper cloth guide portion 170, that is, the lower surface of the upper cloth 182 may be positioned substantially at the same height as the upper end of the nozzle 135. Thus, the upper cloth 182 horizontally moves from the upper cloth guide portion 170 toward the upper end of the nozzle 135 and does not bend during the movement.

The side regulation portion 167 of the lower cloth guide portion 160 regulates the rightward movement of the lower cloth 180 to guide the feeding of the lower cloth 180. The side regulation portion 177 of the upper cloth guide portion 170 regulates the leftward movement of the upper cloth 182 to guide the feeding of the upper cloth 182. Thus, when bonding the right hem of the lower cloth 180 and the left hem of the upper cloth 182, the two-hem guide member 150 can guide the two cloths 180 and 182 without a positional offset during feeding. It may be desirable for the worker to align the positions in the left-right direction of the right side of the first guide member 40 and the side regulation portion 177.

As described above, the cloth bonding apparatus according to the second embodiment can guide the feeding of the cloth hem of the upper cloth 182 by the first guide member 40 provided in the support portion 30. Thus, the cloth bonding apparatus can bond the cloth hems with a constant width without a positional offset of the cloth hems near the nozzle 135. The two-hem guide member 150 can guide the feeding of the two cloths 180 and 182 on the upstream side of the nozzle 135 in the feeding direction, while the positions of the cloth hems are being aligned. Thus, the quality of bonding by the two-hem bonding process is improved.

The two-hem guide member 150 can feed the two cloths 180 and 182 toward the nozzle 135 in such a way that the lower cloth 180 and the upper cloth 182 sandwich the nozzle 135 from above and below. Thus, the cloths 180 and 182 that are being fed are less likely to contact the front of the nozzle 135 and be subjected to resistance therefrom. The vertical distance between the top surface of the lower cloth 180 and the lower surface of the upper cloth 182 can be kept equal to the width of the nozzle 135 in the vertical direction. Thus, the lower cloth 180 and the upper cloth 182 move toward the vicinity of the nozzle 135 from the upstream side in the feeding direction relative to the nozzle 135 in parallel with the horizontal plane. Thus, the cloth bonding apparatus can apply an adhesive between the two cloths 180 and 182, while minimizing the possibility that the cloths 180 and 182 are subjected to resistance, bending or a ruck.

The worker can move the lower cloth guide portion 160 and the upper cloth guide portion 170 in a direction (in the left-right direction) intersecting with the feeding direction of the cloths 180 and 182. Thus, the worker can adjust the width of the parts to be bonded of the cloths 180 and 182 and apply an adhesive onto the lower cloth 180 with a constant width. The worker can rotate the rotation portion 157 about the connection shaft 158 to switch the position of the two-hem guide member 150 between the use position and the retracted position. Thus, the worker can switch the position of the two-hem guide member 150 to the retracted position when the worker does not perform the two-hem bonding process. Therefore, the two-hem guide member 150 will not hinder the work of the worker.

In the second embodiment described above, the two-hem guide member 150 corresponds to the "second guide member" of the present invention. The long holes 162, 171 and the screws 163, 172 in the two-hem guide member 150 correspond to the "second adjustment mechanism" of the present invention. The connection shaft 158 corresponds to the "switching mechanism" of the present invention.

Variants of the above embodiments will now be described. In the following variants, the same reference numerals are denoted to the elements that are the same as those in the above embodiments, and explanation thereof will be omitted.

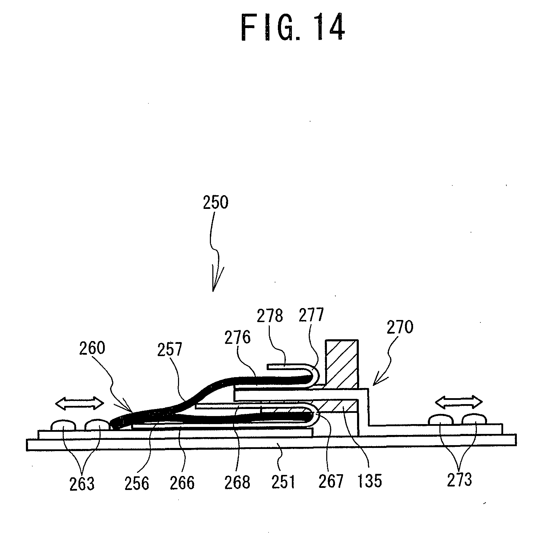

Variant 1 of the second embodiment will now be described with reference to FIG. 14. A two-hem guide member 250 according to Variant 1 is different from the two-hem guide member 150 according to the second embodiment in the orientation in which a lower cloth 256 and an upper cloth 257 are arranged. The two-hem guide member 250 according to Variant 1 can adjust the positions in the left-right direction of the lower cloth guide portion 260 and the upper cloth guide portion 270 independently without mutual influence.

As shown in FIG. 14, the two-hem guide member 250 includes a base portion 251, the lower cloth guide portion 260 and the upper cloth guide portion 270. The base portion 251 is fixed on the bed portion 2. The lower cloth guide portion 260 includes a long hole (not shown). The lower cloth guide portion 260 is fixed on the base portion 251 with two screws 263 through the long hole. The position in the left-right direction (in the arrow direction in FIG. 14) of the lower cloth guide portion 260 can be adjusted within the range of the long hole. The upper cloth guide portion 270 includes a long hole (not shown) like the lower cloth guide portion 260. The upper cloth guide portion 270 is fixed on the base portion 251 with two screws 273. The lower cloth guide portion 260 and the upper cloth guide portion 270 can move independently without mutual influence. Thus, the worker can set the positions of the cloth hems more easily.

The lower cloth guide portion 260 includes a lower regulation portion 266, a side regulation portion 267 and an upper regulation portion 268. Thus, the lower cloth guide portion 260 regulates the rightward movement of the lower cloth 256 to guide the feeding of the lower cloth 256. The upper cloth guide portion 270 includes a lower regulation portion 276, a side regulation portion 277 and an upper regulation portion 278. The upper cloth guide portion 270 regulates the rightward movement of the upper cloth 257 to guide the feeding of the upper cloth 257. Thus, the worker can use the two-hem guide member 250 to perform the two-hem bonding process while the positions of the right ends of the two cloths 256 and 257 are being set. The orientation of the nozzle 135 is opposite to that of the nozzle 135 shown in FIG. 13. Thus, it may be desirable for the worker to align the positions in the left-right direction of the left side face of the first guide member 40 and the side regulation portion 277.

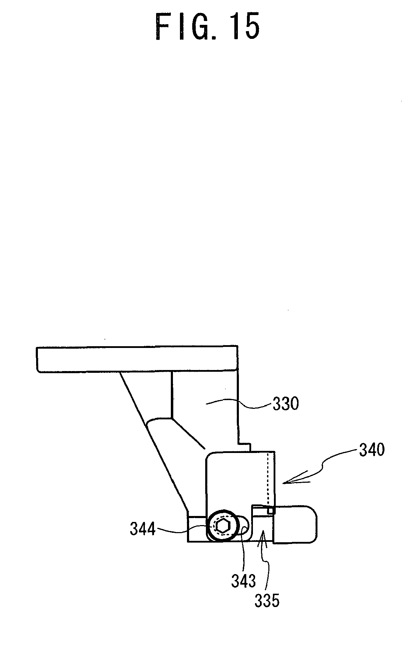

Variant 2 will now be described with reference to FIG. 15. A first guide member 340 according to Variant 2 is fixed not to a support portion 330 but to a position near the base end of a nozzle 335. The first guide member 340 includes a long hole 343 corresponding to the long hole 43 of the first guide member 40. The first guide member 340 is fixed to the nozzle 335 with screws 344 through the long hole 343. The first guide member 340 is fixed with the screws 344 in FIG. 15, but it may be fixed in other way. For example, a groove that extends in the left-right direction may be formed in the nozzle 335 and the first guide member 340 may include a claw which fits into the groove.

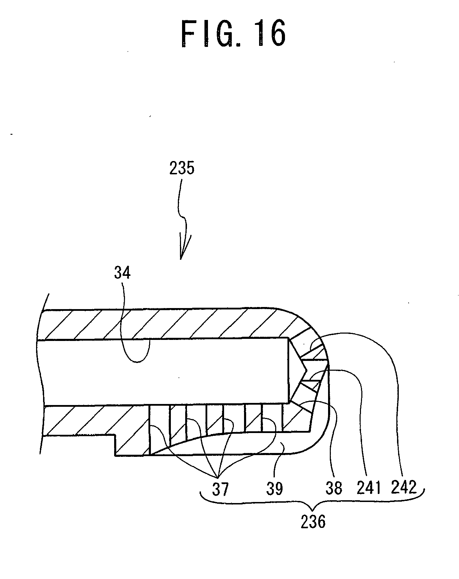

Variant 3 will now be described with reference to FIG. 16. A nozzle 235 according to Variant 3 includes the four lower discharge ports 37 and the tip discharge port 38 facing diagonally downward at the right end. Further, the nozzle 235 is provided at its right end with a tip discharge port 241 which is parallel with the channel 34 and a tip end discharge port 242 facing diagonally upward. The orientation and number of the tip discharge ports of the nozzle are not limited to those shown for the nozzle 235 and can be appropriately set.

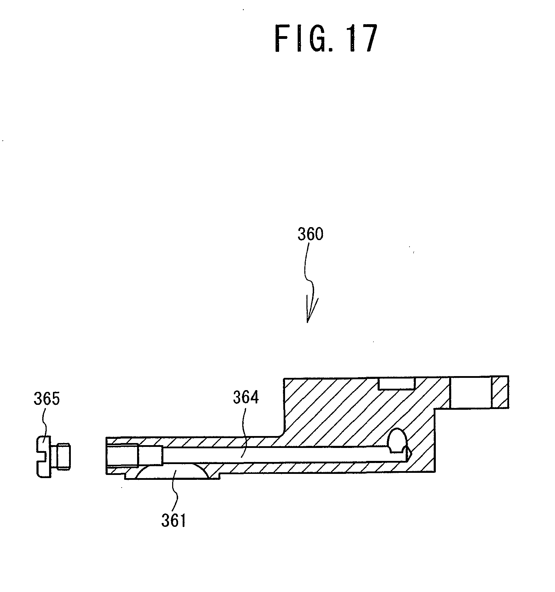

Variant 4 will now be described with reference to FIG. 17. A nozzle 360 according to Variant 4 includes a groove 361 communicating with a channel 364 for an adhesive. The groove 361 is formed to be wider toward the right end (the left side in FIG. 17) of the nozzle 360 (in the front face-rear face direction relative to the sheet of FIG. 17). L,ike Variant 4, even when the nozzle 360 is configured to discharge an adhesive from the groove 361, the width of the groove can be made wider at the right end thereby to uniformly discharge the adhesive. The channel 364 of the nozzle 360 penetrates to the right end. The worker can fasten a screw 365 on the right end of the channel 364 while using the nozzle 360. The worker can easily cleanse the inside of the channel 364 only by removing the screw 365 when the worker does not use the nozzle 360.

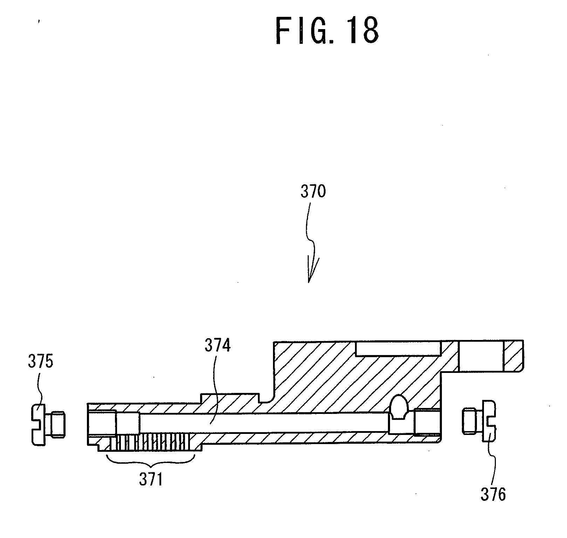

Variant 5 will now be described with reference to FIG. 18. A nozzle 370 according to Variant 5 has only multiple discharge ports 371 extending downward from a channel 374. The diameters of the three discharge ports from the right end among the multiple discharge ports 371 are slightly larger than the remaining discharge ports. By setting the diameters of the discharge ports closer to the right end to be larger than the diameters of other discharge ports, the nozzle 370 can apply an adhesive uniformly. The diameters of the discharge ports 371 do not need to become larger gradually toward the discharge ports at the right end. The discharge ports 371 may be configured such that the diameters of other discharge ports are smaller than the diameters of the discharge ports closer to the right end. The channel 374 of the nozzle 370 penetrates through the nozzle 370, and screws 375 and 376 can close openings at both ends of the channel 374. The worker can remove the screws 375 and 376 to penetrate a drill or the like through the channel 374, thereby easily removing residues of the adhesive that has adhered inside the channel 374.

The embodiments may be modified in other ways. For example, in the two-hem guide member 150 (see FIG. 13), the lower regulation portion 166 of the lower cloth guide portion 160 may be positioned below the lower end of the nozzle 135 by more than the thickness of the lower cloth 180. The top surface of the lower regulation portion 176 of the upper cloth guide portion 170 may be positioned above the upper end of the nozzle 135. Also in this case, the lower cloth 180 and the upper cloth 182 do not contact the front of the nozzle 135 and thus the lower cloth 180 and the upper cloth 182 smoothly move. The nozzles according to the embodiments have a cylindrical bar shape but may employ other shape such as a prismatic column.

The hem guide member 50 does not need to be mountable only on the cloth bonding apparatus 1, but may be mountable on other cloth bonding apparatuses. The hem guide member 50 may be a guide member that is mountable on a cloth bonding apparatus that includes a feeding mechanism that is adapted to press and feed at least one cloth and a nozzle that extends in a direction intersecting a feeding direction of the at least one cloth fed by the feeding mechanism, and that includes a discharge port through which an adhesive is dischargeable. The hem guide member 50 may include a lower guide portion that extends below the nozzle in an extending direction of the nozzle and that is adapted to guide a portion of the one piece of cloth positioned below the nozzle in the feeding direction, an end guide portion that connects to and extends upward from an end of the lower guide portion, the end being located on a same side as a first end of the nozzle on which side the discharge port is provided, and that is adapted to guide a portion of the one piece of cloth covering the first end of the nozzle in the feeding direction, and an upper guide portion that connects to the end guide portion and extends above an upper end of the nozzle toward a second end of the nozzle, the second end being an opposite end to the first end, and that is adapted to guide the hem positioned above the nozzle in the feeding direction. The hem guide member 50 can be applied to multiple types of cloth bonding apparatuses and is therefore versatile.

The two-hem guide member 150 does not need to be mountable only on the cloth bonding apparatus according to the second embodiment. The two-hem guide member 150 may be a guide member that is mountable on a cloth bonding apparatus that includes a feeding mechanism that is adapted to press and feed at least one cloth and a nozzle that extends in a direction intersecting a feeding direction of the at least one cloth fed by the feeding mechanism, and that includes a discharge port through which an adhesive is dischargeable. The two-hem guide member 150 may include a lower cloth guide portion that is adapted to guide a feeding of the lower cloth, and an upper cloth guide portion that is adapted to guide a feeding of the upper cloth. The lower cloth guide portion and the upper cloth guide portion may each include a lower regulation portion that is adapted to regulate a downward movement of the lower cloth or the upper cloth, an upper regulation portion that is adapted to regulate an upward movement of the lower cloth or the upper cloth, and a side regulation portion that is adapted to regulate a movement of the lower cloth or the upper cloth in at least one of directions that intersect the feeding direction. The two-hem guide member 150 can be used for multiple types of cloth bonding apparatuses and is therefore versatile.

## Claims

1. A cloth bonding apparatus comprising:
a feeding mechanism (17) that is adapted to press and feed at least one cloth;
a nozzle (35; 135; 235; 335; 370) that extends in a direction that intersects a feeding direction of the at least one cloth fed by the feeding mechanism (17) and that includes a discharge port (36; 236; 371) through which an adhesive is dischargeable;
a support portion (30; 330) that supports the nozzle (35; 135; 235; 335; 370) on an upstream side of the feeding mechanism (17) in the feeding direction; and
a first guide member (40; 340) that is arranged on at least one of the nozzle (35; 135; 235; 335; 370) and the support portion (30; 330), and that is adapted to guide a hem of the at least one cloth in the feeding direction,
**characterized by**
a second guide member (50) that is arranged on an upstream side of the nozzle (35; 135; 235; 335; 370) in the feeding direction and that is adapted to guide, at least, the hem in the feeding direction.

2. The cloth bonding apparatus according to claim 1, wherein:
the at least one cloth is one piece of cloth, and
the second guide member (50) includes:
a lower guide portion (64) that extends below the nozzle (35; 135; 235; 335; 370) in an extending direction of the nozzle (35; 135; 235; 335; 370) and that is adapted to guide a portion of the one piece of cloth positioned below the nozzle (35; 135; 235; 335; 370) in the feeding direction;
an end guide portion (65) that connects to and extends upward from an end of the lower guide portion (64), the end being located on a same side as a first end of the nozzle (35; 135; 235; 335; 370) on which side the discharge port (36; 236; 371) is provided, and that is adapted to guide a portion of the one piece of cloth covering the first end of the nozzle (35; 135; 235; 335; 370) in the feeding direction; and
an upper guide portion (66) that connects to the end guide portion (65) and extends above an upper end of the nozzle (35; 135; 235; 335; 370) toward a second end of the nozzle (35; 135; 235; 335; 370), the second end being an opposite end to the first end, and that is adapted to guide the hem positioned above the nozzle (35; 135; 235; 335; 370) in the feeding direction.

3. The cloth bonding apparatus according to claim 2,
wherein the nozzle (35; 135; 235; 335; 370) includes:
a tip discharge port (38; 241, 242) that faces in at least one of a direction toward the first end of the nozzle (35; 135; 235; 335; 370) and a direction that is inclined relative to the direction toward the first end of the nozzle (35; 135; 235; 335; 370).

4. The cloth bonding apparatus according to claim 1, wherein:
the at least one cloth includes a lower cloth (180; 256) and an upper cloth (182; 257), the lower cloth (180; 256) being positioned below the upper cloth (182; 257) when the lower cloth (180; 256) and the upper cloth (182; 257) are bonded,
the second guide member (50) includes:
a lower cloth guide portion (160; 260) that is adapted to guide a feeding of the lower cloth (180; 256); and
an upper cloth guide portion (170; 270) that is adapted to guide a feeding of the upper cloth (182; 257), and
the lower cloth guide portion (160; 260) and the upper cloth guide portion (170; 270) each include:
a lower regulation portion (166, 176; 266, 276) that is adapted to regulate a downward movement of the lower cloth (180; 256) or the upper cloth (182; 257);
an upper regulation portion (168, 178; 268, 278) that is adapted to regulate an upward movement of the lower cloth (180; 256) or the upper cloth (182; 257); and
a side regulation portion (167, 177; 267, 277) that is adapted to regulate a movement of the lower cloth (180; 256) or the upper cloth (182; 257) in at least one of directions that intersect the feeding direction.

5. The cloth bonding apparatus according to claim 4, wherein:
the lower regulation portion (166; 266) of the lower cloth guide portion (160; 260) is positioned at a same height as or lower than a lower end of the nozzle (35; 135; 235; 335; 370), and
the lower regulation portion (176; 276) of the upper cloth guide portion (170; 270) is positioned at a same height as or higher than an upper end of the nozzle (35; 135; 235; 335; 370).

6. The cloth bonding apparatus according to claim 5, wherein a distance in a vertical direction between a top surface of the lower cloth (180; 256) guided by the lower cloth guide portion (160; 260) and a lower surface of the upper cloth (182; 257) guided by the upper cloth guide portion (170; 270) is equal to a width of the nozzle (35; 135; 235; 335; 370) in the vertical direction.

7. The cloth bonding apparatus according to anyone of claims 1 to 6, further comprising a second adjustment mechanism (60, 61) that moves a position of the second guide member (50) in the direction that intersects the feeding direction.

8. The cloth bonding apparatus according to anyone of claims 1 to 7, further comprising a switching mechanism (58; 158) that switches a position of the second guide member (50) between a use position in which the second guide member (50) is positioned on the upstream side of the nozzle (35; 135; 235; 335; 370) in the feeding direction and a retracted position in which the second guide member (50) is positioned away from a feeding path of the at least one cloth.

9. The cloth bonding apparatus according to anyone of claims 1 to 8, further comprising a first adjustment mechanism (43, 44) that moves a position of the first guide member (40; 340) in the direction that intersects the feeding direction.

## Patentansprüche

1. Tuchfügegerät mit:
einem Vorschubmechanismus (17), der daran angepasst ist, zumindest ein Tuch zu drücken und vorzuschieben;
einer Düse (35; 135; 235; 335; 370), die sich in einer Richtung erstreckt, die eine Vorschubrichtung des zumindest einen Tuchs schneidet, das durch den Vorschubmechanismus (17) vorgeschoben wird, und die eine Auslassöffnung (36; 236; 371) aufweist, durch die ein Klebemittel ausgelassen werden kann;
einem Stützabschnitt (30; 330), der die Düse (35; 135; 235; 335; 370) an einer stromaufwärtigen Seite des Vorschub-mechanismus' (17) in der Vorschubrichtung stützt; und
einem ersten Führungselement (40; 340), das zumindest an der Düse (35; 135; 235; 335; 370) oder dem Stützabschnitt (30; 330) angeordnet ist, und das daran angepasst ist, einen Saum des zumindest einen Tuchs in der Vorschubrichtung zu führen,
**gekennzeichnet durch**
ein zweites Führungselement (50), das an einer stromaufwärtigen Seite der Düse (35; 135; 235; 335; 370) in der Vorschubrichtung angeordnet ist, und das daran angepasst ist, zumindest den Saum in der Vorschubrichtung zu führen.

2. Tuchfügegerät gemäß Anspruch 1, wobei:
das zumindest eine Tuch ein Tuchstück ist, und
das zweite Führungselement (50) Folgendes aufweist:
einen unteren Führungsabschnitt (64), der sich unter der Düse (35; 135; 235; 335; 370) in einer Erstreckungsrichtung der Düse (35; 135; 235; 335; 370) erstreckt, und der daran angepasst ist, einen Abschnitt des einen Tuchstücks, das unter der Düse (35; 135; 235; 335; 370) positioniert ist, in der Vorschubrichtung zu führen;
einen Endführungsabschnitt (65), der mit einem Ende des unteren Führungsabschnitts (64) verbunden ist und sich davon nach oben erstreckt, wobei sich das Ende an derselben Seite wie ein erstes Ende der Düse (35; 135; 235; 335; 370) befindet, an der die Auslassöffnung (36; 236; 371) vorgesehen ist, und der daran angepasst ist, einen Abschnitt des einen Tuchstücks, das das erste Ende der Düse (35; 135; 235; 335; 370) abdeckt, in der Vorschubrichtung zu führen; und
einen oberen Führungsabschnitt (66), der mit dem Endführungsabschnitt (65) verbunden ist und sich über einem oberen Ende der Düse (35; 135; 235; 335; 370) zu einem zweiten Ende der Düse (35; 135; 235; 335; 370) erstreckt, wobei das zweite Ende ein Ende ist, das dem ersten Ende gegenüberliegt, und der daran angepasst ist, den Saum, der über der Düse (35; 135; 235; 335; 370) positioniert ist, in der Vorschubrichtung zu führen.

3. Tuchfügegerät gemäß Anspruch 2, wobei die Düse (35; 135; 235; 335; 370) Folgendes aufweist:
eine Spitzenauslassöffnung (38; 241, 242), die zumindest in einer Richtung zu dem ersten Ende der Düse (35; 135; 235; 335; 370) oder einer Richtung gerichtet ist, die relativ zu der Richtung zu dem ersten Ende der Düse (35; 135; 235; 335; 370) geneigt ist.

4. Tuchfügegerät gemäß Anspruch 1, wobei:
das zumindest eine Tuch ein unteres Tuch (180; 256) und ein oberes Tuch (182; 257) aufweist, wobei das untere Tuch (180; 256) unter dem oberen Tuch (182; 257) positioniert ist, wenn das untere Tuch (180; 256) und das obere Tuch (182; 257) gefügt werden,
wobei das zweite Führungselement (50) Folgendes aufweist:
einen unteren Tuchführungsabschnitt (160; 260), der daran angepasst ist, einen Vorschub des unteren Tuchs (180; 256) zu führen; und
einen oberen Tuchführungsabschnitt (170; 270), der daran angepasst ist, einen Vorschub des oberen Tuchs (182; 257) zu führen, und
wobei der untere Tuchführungsabschnitt (160; 260) und der obere Tuchführungsabschnitt (170; 270) jeweils Folgendes aufweisen:
einen unteren Regulierabschnitt (166, 176; 266, 276), der daran angepasst ist, eine nach unten gerichtete Bewegung des unteren Tuchs (180; 256) oder des oberen Tuchs (182; 257) zu regulieren;
einen oberen Regulierabschnitt (168, 178; 268, 278), der daran angepasst ist, eine nach oben gerichtete Bewegung des unteren Tuchs (180; 256) oder des oberen Tuchs (182; 257) zu regulieren; und
einen Seitenregulierabschnitt (167, 177; 267, 277), der daran angepasst ist, eine Bewegung des unteren Tuchs (180; 256) oder des oberen Tuchs (182; 257) in zumindest eine der Richtungen zu regulieren, die die Vorschubrichtung schneiden.

5. Tuchfügegerät gemäß Anspruch 4, wobei:
der untere Regulierabschnitt (166; 266) des unteren Tuchführungsabschnitts (160; 260) in derselben Höhe wie oder niedriger als ein unteres Ende der Düse (35; 135; 235; 335; 370) positioniert ist, und
der untere Regulierabschnitt (176; 276) des oberen Tuchführungsabschnitts (170; 270) in derselben Höhe wie oder höher als ein oberes Ende der Düse (35; 135; 235; 335; 370) positioniert ist.

6. Tuchfügegerät gemäß Anspruch 5, wobei ein Abstand in einer vertikalen Richtung zwischen einer oberen Fläche des unteren Tuchs (180; 256), das durch den unteren Tuchführungsabschnitt (160; 260) geführt ist, und einer unteren Fläche des oberen Tuchs (182; 257), das durch den oberen Tuchführungsabschnitt (170; 270) geführt ist, gleich einer Breite der Düse (35; 135; 235; 335; 370) in der vertikalen Richtung ist.

7. Tuchfügegerät gemäß einem der Ansprüche 1 bis 6, des Weiteren mit einem zweiten Einstellmechanismus (60, 61), der eine Position des zweiten Führungselements (50) in jener Richtung bewegt, die die Vorschubrichtung schneidet.

8. Tuchfügegerät gemäß einem der Ansprüche 1 bis 7, des Weiteren mit einem Schaltmechanismus (58; 158), der eine Position des zweiten Führungselements (50) zwischen einer Gebrauchsposition, an der das zweite Führungselement (50) an der stromaufwärtigen Seite der Düse (35; 135; 235; 335; 370) in der Vorschubrichtung positioniert ist, und einer zurückgezogenen Position schaltet, an der das zweite Führungselement (50) von einem Vorschubpfad des zumindest einen Tuchs entfernt positioniert ist.

9. Tuchfügegerät gemäß einem der Ansprüche 1 bis 8, des Weiteren mit einem ersten Einstellmechanismus (43, 44), der eine Position des ersten Führungselements (40; 340) in jener Richtung bewegt, die die Vorschubrichtung schneidet.

## Revendications

1. Dispositif de soudage de tissu comprenant :
un mécanisme d'introduction (17) qui est adapté de manière à presser et introduire au moins un tissu ;
un injecteur (35 ; 135 ; 235 ; 335 ; 370) qui s'étend suivant une direction transversale à une direction d'introduction du ou des tissus introduits par le mécanisme d'introduction (17) et qui comporte un orifice de distribution (36 ; 236 ; 371) à travers lequel un adhésif peut être distribué ;
une partie de support (30 ; 330) qui supporte l'injecteur (35 ; 135 ; 235 ; 335 ; 370) sur un côté amont du mécanisme d'introduction (17) suivant la direction d'introduction ; et
un premier élément de guidage (40 ; 340) qui est agencé sur au moins l'un de l'injecteur (35 ; 135 ; 235 ; 335 ; 370) et de la partie de support (30 ; 330) et qui est adapté de manière à guider un ourlet du ou des tissus suivant la direction d'introduction,
**caractérisé par**
un second élément de guidage (50) qui est agencé sur un côté amont de l'injecteur (35 ; 135 ; 235 ; 335 ; 370) suivant la direction d'introduction et qui est adapté de manière à guider, au moins, l'ourlet suivant la direction d'introduction.

2. Dispositif de soudage de tissu selon la revendication 1, dans lequel :
le ou les tissus forment un premier morceau de tissu, et le second élément de guidage (50) comporte :
une partie de guidage inférieure (64) qui s'étend au-dessous de l'injecteur (35 ; 135 ; 235 ; 335 ; 370) suivant une direction d'extension de l'injecteur (35 ; 135 ; 235 ; 335 ; 370) et qui est adaptée afin de guider une partie du premier morceau du tissu positionné au-dessous de l'injecteur (35 ; 135 ; 235 ; 335 ; 370) suivant la direction d'introduction ;
une partie de guidage d'extrémité (65) qui est reliée à la partie de guidage inférieure (64) et s'étend vers le haut à partir d'une extrémité de cette dernière, l'extrémité étant située du même côté qu'une première extrémité de l'injecteur (35 ; 135 ; 235 ; 335 ; 370), côté sur lequel l'orifice de distribution (36 ; 236 ; 371) est agencé, et qui est adaptée de manière à guider une partie du premier morceau de tissu recouvrant la première extrémité de l'injecteur (35 ; 135 ; 235 ; 335 ; 370) suivant la direction d'introduction ; et
une partie de guidage supérieure (66) qui est reliée à la partie de guidage d'extrémité (65) et s'étend au-dessus d'une extrémité supérieure de l'injecteur (35 ; 135 ; 235 ; 335 ; 370) vers une seconde extrémité de l'injecteur (35 ; 135 ; 235 ; 335 ; 370), la seconde extrémité étant une extrémité opposée à la première extrémité, et qui est adaptée de manière à guider l'ourlet positionné au-dessus de l'injecteur (35 ; 135 ; 235 ; 335 ; 370) suivant la direction d'introduction.

3. Dispositif de soudage de tissu selon la revendication 2, dans lequel l'injecteur (35 ; 135 ; 235 ; 335 ; 370) comporte :
un orifice de distribution en pointe (38 ; 241, 242) qui fait face suivant au moins l'une d'une direction orientée vers la première extrémité de l'injecteur (35 ; 135 ; 235 ; 335 ; 370) et d'une direction qui est inclinée par rapport à la direction orientée vers la première extrémité de l'injecteur (35 ; 135 ; 235 ; 335 ; 370).

4. Dispositif de soudage de tissu selon la revendication 1, dans lequel :
le ou les tissus comportent un tissu inférieur (180 ; 256) et un tissu supérieur (182 ; 257), le tissu inférieur (180 ; 256) pouvant être positionné au-dessous du tissu supérieur (182 ; 257) lorsque le tissu inférieur (180 ; 256) et le tissu supérieur (182 ; 257) sont soudés,
le second élément de guidage (50) comporte :
une partie de guidage de tissu inférieur (160 ; 260) qui est adaptée de manière à guider une introduction du tissu inférieur (180 ; 256) ; et
une partie de guidage de tissu supérieur (170 ; 270) qui est adaptée de manière à guider une introduction du tissu supérieur (182 ; 257), et
la partie de guidage de tissu inférieur (160 ; 260) et la partie de guidage de tissu supérieur (170 ; 270) comportent chacune:
une partie de régulation inférieure (166, 176 ; 266, 276) qui est adaptée de manière à réguler un mouvement vers le bas du tissu inférieur (180 ; 256) ou du tissu supérieur (182 ; 257) ;
une partie de régulation supérieure (168, 178 ; 268, 278) qui est adaptée de manière à réguler un mouvement vers le haut du tissu inférieur (180 ; 256) ou du tissu supérieur (182 ; 257) ; et
une partie de régulation latérale (167, 177 ; 267, 277) qui est adaptée de manière à réguler un mouvement du tissu inférieur (180 ; 256) ou du tissu supérieur (182 ; 257) suivant au moins l'une des directions transversales à la direction d'introduction.

5. Dispositif de soudage de tissu selon la revendication 4, dans lequel :
la partie de régulation inférieure (166 ; 266) de la partie de guidage de tissu inférieur (160 ; 260) est positionnée à une hauteur identique ou inférieure à celle d'une extrémité inférieure de l'injecteur (35 ; 135 ; 235 ; 335 ; 370), et
la partie régulation inférieure (176 ; 276) de la partie de guidage de tissu supérieur (170 ; 270) est positionnée à une hauteur identique ou supérieure à celle d'une extrémité supérieure de l'injecteur (35 ; 135 ; 235 ; 335 ; 370).

6. Dispositif de soudage de tissu selon la revendication 5, dans lequel une distance suivant une direction verticale entre une surface supérieure du tissu inférieur (180 ; 256) guidé par la partie de guidage de tissu inférieur (160 ; 260) et une surface inférieure du tissu supérieur (182 ; 257) guidé par la partie de guidage de tissu supérieur (170 ; 270) est égale à une largeur de l'injecteur (35 ; 135 ; 235 ; 335 ; 370) suivant la direction verticale.

7. Dispositif de soudage de tissu selon l'une quelconque des revendications 1 à 6, comprenant, en outre, un second mécanisme de réglage (60, 61) qui déplace une position du second élément de guidage (50) suivant la direction transversale à la direction d'introduction.

8. Dispositif de soudage de tissu selon l'une quelconque des revendications 1 à 7, comprenant, en outre, un mécanisme de commutation (58 ; 158) qui commute une position du second élément de guidage (50) entre une position d'utilisation dans laquelle le second élément de guidage (50) est positionné sur le côté amont de l'injecteur (35 ; 135 ; 235 ; 335 ; 370) suivant la direction d'introduction et une position rétractée dans laquelle le second élément de guidage (50) est positionné à l'écart d'un trajet d'introduction du ou des tissus.

9. Dispositif de soudage de tissu selon l'une quelconque des revendications 1 à 8, comprenant, en outre, un premier mécanisme de réglage (43, 44) qui déplace une première position du premier élément de guidage (40 ; 340) suivant la direction transversale à la direction d'introduction.
